# EUROPEAN PATENT APPLICATION

(11) **EP 4 667 503 A1**
(43) Date of publication of application: **24.12.2025**
(21) Application number: 24182747.6
(22) Date of filing: 18.06.2024
(51) Int. Cl.: C08G 18/10, C08G 18/22, C08G 18/28, C08G 18/32, C08G 18/38, C08G 18/42, C08G 18/48, C08G 18/66, C08G 18/76, C08G 18/80, C09D 175/06

(54) **LIQUID APPLIED LEADING EDGE PROTECTION FOR WIND TURBINE BLADES**

(71) Applicant: Sika Technology AG, 6340 Baar (CH)
(72) Inventor: SCHLUMPF, Michael, 8143 Stallikon (CH)
(74) Representative: Sika Patent Attorneys

(57) **Abstract**

The present invention relates to a polyurethane composition consisting of a first component **A** and a second component **B,** wherein the first component **A** contains at least one polyol **A1** having an average OH functionality in the range from 1.5 to 4 and a number average molecular weight Mₙ in the range from 250 to 10'000 g/mol and at least one compound **T** that has at least one thiol group; and the second component **B** includes at least one polyisocyanate **I,** wherein one of the two components additionally comprises at least one metal catalyst **K** for the reaction of hydroxyl groups and isocyanate groups that is able to form thio complexes, and the molar ratio of all the thiol groups in the at least one compound **T** to all metal atoms in the at least one metal catalyst **K** is between 1:1 and 250:1, characterized in that polyol **A1** is at least one polyester or polycarbonate polyol, and polyisocyanate **I** comprises diphenylmethane 4,4'-, 2,4'- and/or 2,2'-diisocyanate (MDI) and/or isocyanate-functional reaction products of MDI.

Such a composition has outstanding mechanical properties after curing and is highly resistant against mechanical and environmental impacts. Furthermore, it cures fast and under ambient or cold conditions. The composition of the invention is thus particularly suitable as a leading edge protective (LEP) coating for manufacturing and repair of wind turbine rotor blades.

## Description

### Technical field

The invention relates to the field of two-component polyurethane compositions and to the use thereof, in particular as protective coatings for wind turbine blades, and a process for coating a substrate using this two-component compositions and a coated article obtained by this process.

### State of the art

Rotor blades in general, and wind turbine rotor blades in particular, are constantly exposed to adverse environmental influences. In particular, raindrops, snow particles, hail, or grains of sand, which may hit the rotor blades with high energy during operation due to the rotation of the rotor blades and severely damage the surfaces of the rotor blades, especially in their leading edge, which is the foremost edge or the part of the blade that first contacts air during rotational operation. These damage mechanisms are generally referred to as "rain erosion".

Over time, rain erosion causes the surface and especially the leading edge of rotor blades to erode, roughen and, in the worst case, damage deeper layers in the blade structure. The leading edges of the rotor blades in the direction of rotation are particularly exposed and susceptible to damage. Even roughening of the surfaces of the rotor blades can lead to significant losses in the performance of a wind turbine, as this can cause undesirable turbulence. Damage to the blade structure can impair the safety of the wind turbine in the long term.

Therefore, systems and processes for leading edge protection (LEP) have been developed.

In order to protect the leading edges of rotor blades, it is for example known to coat them with an additional liquid protective layer, which is renewed from time to time. This can be done during production of the wind turbine blade or in repair operations where working wind rotors are briefly stopped and their blades repaired by renewing the leading edge protection.

One such method is disclosed in EP 3 458 710 B1. This method is better suited for production of wind rotor blades than for repair, as it involves applying a first layer of a curable composition to the leading edge, applying a layer of fibrous material onto this first layer, and applying a second layer of curable composition on the layer of fibrous material, to create a reinforced coating layer. The curable composition, referred to as "paint" in this document, may be a two-component polyurethane composition, an epoxy resin, or other composition. However, the multi-layer approach including a fibrous material in between is difficult to use in repair applications and the coating composition itself is not specifically defined in this publication.

As another example, WO 2021/179069 A1 discloses erosion-protective polyurethane compositions mainly based on aliphatic polyisocyanates and specific polyols. When cured, these elastomeric coatings have good mechanical and erosion-resisting properties and are suitable for LEP applications. However, these compositions cure slowly and require elevated temperatures for full cure within reasonable time. Thus, they are not very well suitable for LEP repair operations, which requires fast-curing materials that cure properly under ambient or cold conditions.

As a further example, WO 2020/260578 A1 discloses coating compositions for LEP applications, both in manufacturing and in repair processes of wind rotor blades. The compositions disclosed in this publication are based on polyetheraspartic esters and aliphatic polyisocyanates. While these compositions exhibit good LEP properties, they are also rather slow-curing, which is not ideal for repair operations, for example in off-shore wind parks in cold climates.

Also known are so-called edge protection elements in the form of foils or preshaped profiles, which are glued or otherwise attached to the exposed edges and replaced when necessary.

WO 2016/075619 A1, for example, describes a U-shaped protective strip made of a polymer material, which is firmly attached to the leading edge of a rotor blade by means of a special adhesive.

WO 2018/060298 A1, as another example, discloses a similarly curve-shaped protective cover element that comprises a heat-activatable adhesive layer on its inner surface that is able to bond the element to the leading edge of a rotor blade.

However, all solutions using additional protective cover elements require prior manufacturing of these elements that must be adapted to each specific rotor blade edge shape and their attachment requires additional application of a suitable adhesive or attachment system. Furthermore, worn edge protection elements are usually difficult to remove from the rotor blade in repair operations due to the adhesive bond between the protection element and the wind rotor blade surface.

There is therefore still a need for new and improved leading edge protection manufacture and repair that overcomes the aforementioned disadvantages and provides a fast and easily applied LEP solution that is, in terms of mechanical performance and stability, suitable both for manufacturing and repair operations of wind rotor blade leading edges. It is furthermore desirable that the application thereof can be done in much shorter time than known liquid applied LEP solutions and does not require pre-fabrication of specially adapted protection elements. Nevertheless, it should still provide an excellent LEP coating with outstanding rain erosion resistance.

### Summary of the invention

The object of the present invention is therefore to provide a two-component polyurethane composition that cures very rapidly to form a mechanically excellent and highly stable mass suitable as protective coating, especially as LEP coating for the manufacture and repair of wind turbine rotor blades.

This object is surprisingly achieved with the polyurethane composition of the invention as claimed in claim 1. It comprises a polyol component containing at least one polyester or polycarbonate polyol, preferably a polyester polyol, with an average OH-functionality range from 1.5 to 4, and a compound having at least one thiol group in the first component and a polyisocyanate in the second component, wherein the polyisocyanate must comprise diphenylmethane 4,4'-, 2,4'- and/or 2,2'-diisocyanate (MDI) and/or isocyanate-functional reaction products of MDI.

For curing the composition, the composition further contains a metal catalyst that is able to form thio complexes, the ratio of thiol groups to metal atoms in the composition being fixed to between 1:1 and 250:1. The composition has very good mechanical properties and excellent rain erosion resistance when cured and cures very rapidly. It is especially suitable as coating, in particular as LEP coating for wind turbine rotor blades.

Further aspects of the invention are the subject of further independent claims. Particularly preferred embodiments of the invention are the subject of the dependent claims.

### Ways of executing the invention

The present invention relates in a first aspect to a polyurethane composition consisting of a first and a second component; wherein
- the first component **A** comprises
   - at least one polyol **A1** having an average OH functionality in the range from 1.5 to 4, preferably in the range from 2 to 3, and a number average molecular weight Mₙ in the range from 250 to 15'000 g/mol; and
   - at least one compound **T** that has at least one thiol group; and
- the second component **B** comprises
   - at least one polyisocyanate **I;**

wherein one of the two components additionally comprises at least one metal catalyst **K** for the reaction of hydroxyl groups and isocyanate groups that is able to form thio complexes; and
the molar ratio of all the thiol groups in the at least one compound **T** to all metal atoms in the at least one metal catalyst **K** is between 1:1 and 250:1 ;
characterized in that
polyol **A1** is at least one polyester or polycarbonate polyol, preferably a polyester polyol; and
polyisocyanate I comprises diphenylmethane 4,4'-, 2,4'- and/or 2,2'-diisocyanate (MDI) and/or isocyanate-functional reaction products of MDI, in particular comprising a polyurethane polymer **PU** containing isocyanate groups, obtained from a reaction of at least one polyol and MDI.

The prefix "poly" in substance names such as "polyol", "polyisocyanate", "polyether" or "polyamine" in the present document indicates that the respective substance formally contains more than one of the functional group that occurs in its name per molecule.

The term "polymer" in the present document firstly encompasses a collective of macromolecules that are chemically uniform but differ in the degree of polymerization, molar mass, and chain length, said collective having been produced by a "poly" reaction (polymerization, polyaddition, polycondensation). The term secondly also encompasses derivatives of such a collective of macromolecules from "poly" reactions, i.e., compounds obtained by reactions, for example additions or substitutions, of functional groups on defined macromolecules and that may be chemically uniform or chemically nonuniform. The term further encompasses so-called prepolymers too, i.e., reactive oligomeric initial adducts, the functional groups of which are involved in the formation of macromolecules.

The term "polyurethane polymer" encompasses all polymers produced according to the so-called diisocyanate polyaddition process. This also includes polymers that are virtually or completely free of urethane groups. Examples of polyurethane polymers are polyether polyurethanes, polyester polyurethanes, polyether polyureas, polyureas, polyester polyureas, polyisocyanurates, and polycarbodiimides.

"Molecular weight" is in the present document understood to mean the molar mass (in grams per mole) of a molecule or a molecule residue. "Average molecular weight" refers to the number average Mₙ of a polydisperse mixture of oligomeric or polymeric molecules or molecule residues, which is typically determined by gel-permeation chromatography (GPC) against polystyrene as standard.

Percent by weight values, abbreviated to % by weight, refer to the proportions by mass of a constituent in a composition based on the overall composition, unless otherwise stated. The terms "mass" and "weight" are used synonymously in the present document.

A "primary hydroxyl group" refers to an OH group attached to a carbon atom having two hydrogens.

"Pot life" refers in this document to the time within which, after mixing the two components, the polyurethane composition can be processed before the viscosity resulting from the progression of the crosslinking reaction has become too high for further processing.

"Room temperature" in the present document refers to a temperature of 23°C. A substance or a composition is described as "storage-stable" or "storable" if it can be stored at room temperature in a suitable container for a relatively long period, typically at least 3 months up to 6 months or longer, without this storage resulting in any change in its application or use properties, especially in the viscosity and crosslinking rate, to an extent relevant to the use thereof.

All industry standards and norms mentioned in this document relate to the versions valid at the date of first filing, if not otherwise specified.

The "average OH functionality" is the number of OH groups per polyol molecule, averaged over all the polyol molecules. If, for example, 50% of all polymer molecules contain two hydroxyl groups and the other 50% contain three, the result is an average OH functionality of 2.5. The average OH functionality can in particular be determined by calculation from the hydroxyl value and the molecular weight Mₙ determined via GPC.

In the context of the invention, the "leading edge" of a wind turbine rotor blade indicates the edge portion of the blade that first cuts into the wind under rotational operation. The opposite edge can be denoted the "trailing edge". The term "Leading Edge Protection" is typically abbreviated "LEP". In the present context the terms "Leading Edge Protective coating (composition)" or "LEP composition" are used interchangeably and indicate a coating composition applied to at least a part of a wind blade including at least to the leading edge or at least to a part of the leading edge of a wind blade to provide protection against erosion caused by for example rain, hail, ice, UV, water absorption and other weather conditions. One established way to assess the effectiveness of a LEP Coating is the Rain Erosion Test (RET) according to the standard DNV-RP-0171 "Testing of rotor blade erosion protection systems".

The polyurethane composition of the invention consists of a first component **A** and a second component **B,** which are mixed only on application of the polyurethane composition and are stored prior to this in separate packagings.

The first component **A** comprises
- at least one polyol **A1** having an average OH functionality in the range from 1.5 to 4, preferably in the range from 2 to 3, and a number average molecular weight Mₙ in the range from 250 to 15'000 g/mol, wherein polyol **A1** is at least one polyester or polycarbonate polyol, preferably a polyester polyol;
- preferably at least one diol **A2** having two hydroxyl groups that are linked via a C2 to C9 carbon chain; and
- at least one compound **T** that has at least one thiol group.

### Polyol A1

The first component **A** contains at least one polyol **A1** having an average OH functionality in the range from 1.5 to 4, preferably in the range from 2 to 3, and a number average molecular weight Mₙ in the range from 250 to 10'000 g/mol. Polyol **A1** is at least one polyester or polycarbonate polyol, preferably a polyester polyol.

Preferably, component **A** contains between 30% by weight and 90% by weight, preferably between 50% by weight and 85% by weight, in particular between 60% by weight and 80% by weight, of polyol **A1,** based on component **A.**

Polyol **A1** may be and preferably is a mixture of different polyols. The average OH functionality and average molecular weight Mₙ accordingly may refer to the overall OH functionality and overall molecular weight Mₙ of a mixture of different polyols, whereby the mixture must satisfy these requirements.

Suitable polyols **A1** are polyester polyols, polycarbonate polyols, polyestercarbonate polyols, and mixtures of these polyols. Preferred as polyols **A1** are polyester polyols.

Polyether polyols, poly(meth)acrylate polyols, or polybutadiene polyols, however, are not suitable as polyols **A1.**

Thus, polyol **A1** preferably consists of polyester polyols, polycarbonate polyols, polyestercarbonate polyols, and mixtures of these polyols.

Suitable polyester polyols include in particular polyesters that bear at least two hydroxyl groups and are produced by known processes, in particular polycondensation of hydroxycarboxylic acids or polycondensation of aliphatic and/or aromatic polycarboxylic acids with dihydric or polyhydric alcohols. More suitable are polyester polyols produced from dihydric to trihydric alcohols such as 1,2-ethanediol, diethylene glycol, 1,2-propanediol, dipropylene glycol, 1,4-butanediol, 1,5-pentanediol, 1,6-hexanediol, neopentyl glycol, glycerol, 1,1,1-trimethylolpropane or mixtures of the abovementioned alcohols with organic dicarboxylic acids or the anhydrides or esters thereof, for example succinic acid, glutaric acid, adipic acid, trimethyladipic acid, suberic acid, azelaic acid, sebacic acid, dodecanedicarboxylic acid, maleic acid, fumaric acid, dimer fatty acid, phthalic acid, phthalic anhydride, isophthalic acid, terephthalic acid, dimethyl terephthalate, hexahydrophthalic acid, trimellitic acid and trimellitic anhydride or mixtures of the abovementioned acids, as are polyester polyols formed from lactones such as ε-caprolactone.

Particularly suitable are polyester diols, in particular those produced from adipic acid, azelaic acid, sebacic acid, dodecanedicarboxylic acid, dimer fatty acid, phthalic acid, isophthalic acid and terephthalic acid as the dicarboxylic acid or from lactones such as ε-caprolactone and from ethylene glycol, diethylene glycol, neopentyl glycol, 1,4-butanediol, 1,6-hexanediol, dimer fatty acid diol, and 1,4-cyclohexanedimethanol as the dihydric alcohol.

Suitable polycarbonate polyols include in particular those obtainable by reaction for example of the abovementioned alcohols used to construct the polyester polyols with dialkyl carbonates such as dimethyl carbonate, diaryl carbonates such as diphenyl carbonate, or phosgene. Likewise suitable are polycarbonates obtainable from the copolymerization of CO₂ with epoxides such as ethylene oxide and propylene oxide. Polycarbonate diols, in particular amorphous polycarbonate diols, are particularly suitable.

Particularly suitable and preferred polyester polyols are a condensation product of 3-methylpentane-1,5-diol and/or trimethylol propane and adipic acid or sebacic acid. Polyester diols and triols of this kind are available, for example, under the trade name Kuraray^{®} from Kuraray.

For example, a particularly preferred polyester diol, a reaction product of 3-methylpentane-1,5-diol and adipic acid is Kuraray^{®} Polyol P-2010.

For example, particularly preferred polyester triols, a reaction product of 3-methylpentane-1,5-diol, trimethylol propane, and adipic acid are Kuraray^{®} Polyol F-1010 and Kuraray^{®} Polyol F-3010.

A particularly suitable aliphatic polycarbonate diol is based on 3-methylpentane-1,5-diol and hexane-1,6-diol and is available, for example, under the Kuraray C2050 trade name from Kuraray.

A particularly suitable aliphatic polyester carbonate diol is based on hexane-1,6-diol and ε-caprolactone is available under the Desmophen^{®} C 1200 trade name from Bayer Material Science.

In preferred embodiments of the polyurethane composition according to the invention, said polyol **A1** is a mixture of a first polyester polyol **A1a** having an average OH-functionality of between 1.5 and 2.5 and a second polyester polyol **A1b** having an average OH-functionality of between 2.5 and 3.5, wherein the weight ratio of polyol **A1a** to polyol **A1b** is in the range of 15:1 to 2:1, preferably 10:1 to 5:1.

Preferably, said polyol **A1a** has a number average molecular weight Mₙ in the range from 500 to 2'500 g/mol, and said polyol **A1b** has a number average molecular weight Mₙ in the range from 1'000 to 4'000 g/mol.

In addition to these recited polyols **A1,** it is possible to include small amounts, in particular up to 5 % by weight based on component **A,** of further low-molecular-weight dihydric or polyhydric alcohols such as diethylene glycol, triethylene glycol, the isomeric dipropylene glycols and tripropylene glycols, the isomeric decanediols and undecanediols, hydrogenated bisphenol A, dimer fatty alcohols, 1,1,1-trimethylolethane, 1,1,1-trimethylolpropane, glycerol, pentaerythritol, sugar alcohols such as xylitol, sorbitol or mannitol, sugars such as sucrose, other higher polyhydric alcohols, low-molecular-weight alkoxylation products of the abovementioned dihydric and polyhydric alcohols, and also mixtures of the abovementioned alcohols. In addition, polyols containing other heteroatoms, for example methyldiethanolamine or thiodiglycol, may also be present.

### Diol A2

The first component **A** furthermore preferably comprises at least one diol **A2** having two hydroxyl groups that are linked via a C2 to C9 carbon chain.

Such small diols are known as chain extenders and increase the mechanical properties of polyurethane compositions.

Suitable as diol **A2** are linear or branched alkylene diols having two primary or secondary hydroxyl groups, alkylene diols having one primary and one secondary hydroxyl group, and cycloaliphatic diols.

The diol **A2** is preferably a linear aliphatic diol having two primary hydroxyl groups that are linked via a C4 to C9 carbon chain. Such a diol has the advantage of yielding polyurethanes having particularly high moduli of elasticity in the region of low elongation, for example between 0 and 5%, which is advantageous for the intended application of the present invention.

In particular, the diol **A2** is selected from the group consisting of ethylene glycol, 1,3-propanediol, 1,4-butanediol, 1,5-pentanediol, 1,6-hexanediol, 1,7-heptanediol, 1,8-octanediol, 1,9-nonanediol, 1,3-butanediol, 2,3-butanediol, 2-methyl-1,3-propanediol, 1,2-pentanediol, 2,4-pentanediol, 2-methyl-1,4-butanediol, 2,2-dimethyl-1,3-propanediol (neopentyl glycol), 1,2-hexanediol, 1,4-butanediol, 3-methyl-1,5-pentanediol, 1,2-octanediol, 3,6-octanediol, 2-ethyl-1,3-hexanediol, 2,2,4-trimethyl-1,3-pentanediol, 2-butyl-2-ethyl-1,3-propanediol, 2,7-dimethyl-3,6-octanediol, 1,4-cyclohexanediol, 1,3-cyclohexanedimethanol, and 1,4-cyclohexanedimethanol.

The diol **A2** is more preferably selected from the group consisting of 1,4-butanediol, 1,5-pentanediol, 1,6-hexanediol, 1,7-heptanediol, 1,8-octanediol, and 1,9-nonanediol.

The diol **A2** is most preferably selected from the group consisting of 1,4-butanediol, 1,5-pentanediol, 1,6-hexanediol, and 1,9-nonanediol. These diols are commercially readily available and provide polyurethanes having particularly high moduli of elasticity at low elongation when cured.

The first component **A** preferably comprises between 1 and 15% by weight, more preferably 2 to 10% by weight, based on component **A,** of diol **A2.**

Furthermore, it might be advantageous that small amounts of water are added to component **A,** for example between 0.1 % by weight and 2.5 % by weight, preferably between 0.5% by weight and 2% by weight, based on component **A.** Water may add the advantage that the content of active hydrogen within the polyol component **A** may be adjusted easily to any given NCO content of a component **B,** thus avoiding excess NCO during and after curing without having to re-formulate the polyol composition completely.

### Compound T having at least one thiol group

The first component **A** further comprises at least one compound **T** that has at least one thiol group. Suitable are all compounds that have at least one thiol/mercapto group and that can be formulated into the composition according to the invention. A thiol group is understood here as meaning an -SH group that is attached to an organic radical, for example an aliphatic, cycloaliphatic or aromatic carbon radical.

Preference is given to compounds having 1 to 6, more preferably 1 to 4, most preferably 1 or 2 thiol groups. Compounds having only one thiol group have the advantage that they do not form poorly soluble complexes with the metal catalyst **K** which tend to precipitate, and that the pot life can be adjusted particularly precisely. Compounds having two thiol groups have the advantage that the mechanical properties of the composition after curing are improved.

Examples of suitable compounds **T** having one thiol group are 3-mercaptopropyltrimethoxysilane, 3-mercaptopropyltriethoxysilane, 3-mercaptopropane-1,2-diol, 2-mercaptotoluimidazole or 2-mercaptobenzothiazole, aliphatic monothiols, in particular 1-decanthiol, and 3-mercaptopropionic acid alkyl esters and thioglycolic acid alkyl esters, in particular 2-ethylhexyl thioglycolate, 2-ethylhexyl-3-mercaptopropionate, and isooctyl thioglycolate.

Examples of suitable compounds **T** having more than one thiol group are ethylene glycol di(3-mercaptopropionate), ethylene glycol dimercaptoacetate, dipentaerythritol hexa(3-mercaptopropionate), 2,3-dimercapto-1,3,4-thiadiazole or pentaerythritol tetrakis(3-mercaptopropionate).

The compound **T** is preferably selected from the group consisting of ethylene glycol di(3-mercaptopropionate), ethylene glycol dimercaptoacetate, dipentaerythritol hexa(3-mercaptopropionate), and isooctyl thioglycolate.

In preferred embodiments of the polyurethane composition according to the invention, the at least one compound **T** comprises a monothiol or polythiol compound having 1 or 2 thiol groups, in particular isooctyl thioglycolate and/or ethylene glycol di(3-mercaptopropionate).

The molar ratio of all the thiol groups in the at least one compound **T** to all metal atoms in the at least one metal catalyst **K** must be between 1:1 and 250:1.

It is preferably between 2:1 and 150:1, especially between 5:1 and 80:1, most preferably between 2:1 and 10:1.

This quantitative ratio allows the pot life to be adjusted, specifically within the intrinsic limits of the particular composition, through, for example, the content of catalyst, the reactivity of the isocyanates present, and the amount thereof. The lower limit of the pot life is the pot life that is obtained in a given composition when using a defined amount of catalyst without addition of compound **T.** In many situations suitable for a use according to the invention as a coating and as a consequence of the high reactivity of isocyanate groups with hydroxyls in the presence of a catalyst, without compound **T,** no actual pot life at all is achieved, and the composition starts to cure almost immediately on mixing the two components.

The upper limit of the adjustable pot life is accordingly the pot life that would be achieved through the uncatalyzed isocyanate-hydroxyl reaction if a catalyst is not used. Even without the use of a catalyst, this reaction will commence at some point after mixing the two components. However, the reaction without catalyst proceeds much more slowly and with a very sluggish development of poorer mechanical properties in the cured material.

One key advantage achieved by the two-component polyurethane composition of the invention is a system that cures and develops strength with extraordinary rapidity, while at the same time having an adequately long pot life that allows it to be processed in a user-friendly manner. This means, for example, that application of a coating composition may be carried out on relatively large substrates too, which can be subjected to mechanical stress just a very short time after application of the coating composition. This results, for example, in a significant shortening of throughput times in industrial production or in significantly shorter repair processes. Due to the high reactivity of the MDI-based isocyanate reactants and the possible high catalyst loading, curing occurs without the need for heating and even at cold temperatures. A further advantage of the polyurethane compositions of the invention is the possibility of being able to adjust the pot life within certain limits as described above. This is very advantageous particularly in automated applications and can for example allow further optimization of throughput times in industrial production, since the pot life can be tailored to the desired use.

The amount of compound **T** in the first component **A** is preferably within a range from 0.1% to 10% by weight, based on component **A.**

### Polvisocvanate I

The second component **B** comprises at least one polyisocyanate **I.** Polyisocyanate **I** comprises or consists of diphenylmethane 4,4'-, 2,4'- and/or 2,2'-diisocyanate (MDI) and/or isocyanate-functional reaction products of MDI, in particular comprising a polyurethane polymer **PU** containing isocyanate groups, obtained from a reaction of at least one polyol and MDI.

The inclusion of MDI is important for the present invention, in order to ensure the fast curing reaction and mechanical performance after curing. However, it is possible to use a mixture of MDI and other polyisocyanates.

Suitable polyisocyanates are in particular monomeric di- or triisocyanates and also oligomers, polymers, and derivatives of monomeric di- or triisocyanates, and any mixtures thereof.

Suitable aromatic monomeric di- or triisocyanates are in particular tolylene 2,4- and 2,6-diisocyanate and any mixtures of these isomers (TDI), diphenylmethane 4,4'-, 2,4'-, and 2,2'-diisocyanate and any mixtures of these isomers (MDI), mixtures of MDI and MDI homologs (polymeric MDI or PMDI), 1,3- and 1,4-phenylene diisocyanate, 2,3,5,6-tetramethyl-1,4-diisocyanatobenzene, naphthalene 1,5-diisocyanate (NDI), 3,3'-dimethyl-4,4'-diisocyanatodiphenyl (TODI), dianisidine diisocyanate (DADI), 1,3,5-tris(isocyanatomethyl)benzene, tris(4-isocyanatophenyl)methane, and tris(4-isocyanatophenyl) thiophosphate.

Suitable aliphatic monomeric di- or triisocyanates are in particular tetramethylene 1,4-diisocyanate, 2-methylpentamethylene 1,5-diisocyanate, hexamethylene 1,6-diisocyanate (HDI), 2,2,4- and 2,4,4-trimethylhexamethylene 1,6-diisocyanate (TMDI), decamethylene 1,10-diisocyanate, dodecamethylene 1,12-diisocyanate, lysine diisocyanate and lysine ester diisocyanate, cyclohexane 1,3- and 1,4-diisocyanate, 1-methyl-2,4- and -2,6-diisocyanatocyclohexane and any mixtures of these isomers (HTDI or H₆TDI), 1-isocyanato-3,3,5-trimethyl-5-isocyanatomethylcyclohexane (= isophorone diisocyanate or IPDI), perhydrodiphenylmethane 2,4'- and 4,4'-diisocyanate (HMDI or H₁₂MDI), 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI), m- and p-tetramethylxylylene 1,3- and 1,4-diisocyanate (m- and p-TMXDI) and bis(1-isocyanato-1-methylethyl)naphthalene, dimer and trimer fatty acid isocyanates such as 3,6-bis(9-isocyanatononyl)-4,5-di-(1-heptenyl)cyclohexene (dimeryl diisocyanate), and α,α,α',α',α",α"-hexamethyl-1,3,5-mesitylene triisocyanate. Preference among these is given to MDI, TDI, HDI, and IPDI.

Suitable oligomers, polymers, and derivatives of the recited monomeric di- and triisocyanates are in particular those derived from MDI, TDI, HDI, and IPDI. Particularly suitable among these are commercially available types, in particular HDI biurets such as Desmodur^{®} N 100 and N 3200 (from Covestro), Tolonate^{®} HDB and HDB-LV (from Vencorex), and Duranate^{®} 24A-100 (from Asahi Kasei); HDI isocyanurates such as Desmodur^{®} N 3300, N 3600, and N 3790 BA (all from Covestro), Tolonate^{®} HDT, HDT-LV, and HDT-LV2 (from Vencorex), Duranate^{®} TPA-100 and THA-100 (from Asahi Kasei), and Coronate^{®} HX (from Nippon Polyurethane); HDI uretdiones such as Desmodur^{®} N 3400 (from Covestro); HDI iminooxadiazinediones such as Desmodur^{®} XP 2410 (from Covestro); HDI allophanates such as Desmodur^{®} VP LS 2102 (from Covestro); IPDI isocyanurates, for example in solution as Desmodur^{®} Z 4470 (from Covestro) or in solid form as Vestanat^{®} T1890/ 100 (from Evonik); TDI oligomers such as Desmodur^{®} IL (from Covestro); and also mixed isocyanurates based on TDI/HDI, for example as Desmodur^{®} HL (from Covestro). Also particularly suitable are MDI forms that are liquid at room temperature (so-called "modified MDI"), which are mixtures of MDI with MDI derivatives such as, in particular, MDI carbodiimides or MDI uretonimines or MDI urethanes, known by trade names such as Desmodur^{®} CD, Desmodur^{®} PF, Desmodur^{®} PC (all from Covestro) or Isonate^{®} M 143 (from Dow), and mixtures of MDI and MDI homologs (polymeric MDI or PMDI), available under trade names such as Desmodur^{®} VL, Desmodur^{®} VL50, Desmodur^{®} VL R10, Desmodur^{®} VL R20, Desmodur^{®} VH 20 N, and Desmodur^{®} VKS 20F (all from Covestro), Isonate^{®} M 309, Voranate^{®} M 229 and Voranate^{®} M 580 (all from Dow) or Lupranat^{®} M 10 R (from BASF). The abovementioned oligomeric polyisocyanates are in practice typically mixtures of substances having different degrees of oligomerization and/or chemical structures. They preferably have a mean NCO functionality of 2.1 to 4.0.

In preferred embodiments of the polyurethane composition according to the invention, all isocyanate groups of polyisocyanate **I** are based on MDI, preferably on 4,4'-MDI, and are present in compounds selected from polyurethane polymer **PU,** monomeric MDI, preferably monomeric 4,4'-MDI, and oligomeric forms of MDI, preferably oligomeric forms of 4,4'-MDI, and mixtures thereof.

In especially preferred embodiments, all isocyanate groups within the composition are based on MDI, preferably on 4,4'-MDI, and are present in compounds selected from polyurethane polymer **PU,** monomeric MDI, preferably monomeric 4,4'-MDI, and oligomeric forms of MDI, preferably oligomeric forms of 4,4'-MDI, and mixtures thereof.

The polyisocyanate **I** of the second component **B** may contain proportions of a polyurethane polymer **PU** containing isocyanate groups and may even consist of such polymers.

The polyurethane polymer **PU** containing isocyanate groups can be produced separately, or the polyurethane polymer **PU** containing isocyanate groups can be formed *in situ* by mixing a polyisocyanate, in particular MDI, with at least one polyol, especially at least a polyether polyol, with the isocyanate groups present in a stoichiometric excess over the OH groups, optionally in the presence of a suitable catalyst.

In preferred embodiments, the polyurethane polymer **PU** has an average molecular weight Mₙ in the range from 500 to 15'000 g/mol, more preferably 1'000 to 10'000 g/mol, especially 1'200 to 5'000 g/mol. It is preferably obtained from the reaction of at least one polyol having an average OH functionality in the range from 1.9 to 3 and at least one monomeric diisocyanate, in particular MDI, preferably employing an NCO/OH ratio of between 1.5/1 and 10/1, in particular between 3/1 and 8/1, more preferably between 4/1 and 7/1.

In the reaction, the OH groups of the polyol react with the isocyanate groups of the monomeric diisocyanate. This also results in what are called chain extension reactions, in that there is reaction of OH groups and/or isocyanate groups of reaction products between polyol and monomeric diisocyanate. The higher the NCO/OH ratio chosen, the lower the level of chain extension reactions that takes place, and the lower the polydispersity and hence the viscosity of the polymer obtained. A measure of the chain extension reaction is the average molecular weight of the polymer, or the breadth and distribution of the peaks in the GPC analysis. A further measure is the effective NCO content of the polymer freed of monomers relative to the theoretical NCO content calculated from the reaction of every OH group with a monomeric diisocyanate.

Suitable monomeric diisocyanates for the production of polyurethane polymer **PU** are commercial aromatic or aliphatic diisocyanates, especially diphenylmethane 4,4'-diisocyanate, optionally with fractions of diphenylmethane 2,4'- and/or 2,2'-diisocyanate (MDI), tolylene 2,4-diisocyanate or mixtures thereof with tolylene 2,6-diisocyanate (TDI), phenylene 1,4-diisocyanate (PDI), naphthalene 1,5-diisocyanate (NDI), hexane 1,6-diisocyanate (HDI), 2,2(4),4-trimethylhexamethylene 1,6-diisocyanate (TMDI), cyclohexane 1,3- or 1,4-diisocyanate, 1-isocyanato-3,3,5-trimethyl-5-isocyanatomethylcyclohexane (isophorone diisocyanate or IPDI), perhydro-diphenylmethane 2,4'- or 4,4'-diisocyanate (HMDI), 1,3- or 1,4-bis(isocyanatomethyl)cyclohexane, m- or p-xylylene diisocyanate (XDI), m-tetramethylxylylene diisocyanate (TMXDI), or mixtures thereof.

A particularly preferred monomeric aromatic diisocyanate is diphenylmethane 4,4'-diisocyanate (4,4'-MDI). This 4,4'-MDI is of a quality that contains only small fractions of diphenylmethane 2,4'- and/or 2,2'-diisocyanate and is solid at room temperature. It enables moisture-curing polyurethane compositions having particularly rapid curing and particularly high strength coupled with high extensibility and elasticity.

The 4,4'-MDI has preferably been distilled and has a purity of at least 95%, especially at least 97.5%.

A commercially available diphenylmethane 4,4'-diisocyanate of this quality is, for example, Desmodur^{®} 44 MC (from Covestro) or Lupranat^{®} MRSS oder ME (from BASF) or Suprasec^{®} 1400 (from Huntsman).

Further preferably, the monomeric diisocyanate is a sterically unhindered diisocyanate, especially MDI, PDI, HDI or HMDI. Such diisocyanates afford moisture-curing polyurethane compositions having a particularly high curing rate and strength.

Most preferred among these is diphenylmethane 4,4'-diisocyanate (4,4'-MDI) as monomeric diisocyanate. In this way, moisture-curing polyurethane compositions having surprisingly good storage stability, particularly rapid curing and particularly high strength coupled with high elasticity are obtained.

Suitable polyols for polyurethane polymer **PU** commercial polyols commonly used for the synthesis of polyurethane polymers that are preferably liquid at room temperature. The same polyols as for polyol **A1** may for example be used.

Suitable polyols are in principle all polyols currently used in the production of polyurethane polymers. Particularly suitable are polyether polyols, polyester polyols, poly(meth)acrylate polyols, polybutadiene polyols, polycarbonate polyols, and also mixtures of these polyols.

Suitable polyester polyols are in particular those described for polyol **A1** further above, in particular polyester polyols **A1a** as described further above.

Suitable polyether polyols, also known as polyoxyalkylene polyols or oligoetherols, are in particular those that are polymerization products of ethylene oxide, 1,2-propylene oxide, 1,2- or 2,3-butylene oxide, oxetane, tetrahydrofuran or mixtures thereof, optionally polymerized with the aid of a starter molecule having two or more active hydrogen atoms such as water, ammonia or compounds having a plurality of OH or NH groups, for example 1,2-ethanediol, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, and mixtures of the recited compounds. Employable are both polyoxyalkylene polyols having a low degree of unsaturation (measured according to ASTM D-2849-69 and expressed in milliequivalents of unsaturation per gram of polyol (mEq/g)), produced for example using so-called double metal cyanide complex catalysts (DMC catalysts), and polyoxyalkylene polyols having a relatively high degree of unsaturation, produced for example using anionic catalysts such as NaOH, KOH, CsOH or alkali metal alkoxides.

Particularly suitable are polyoxyethylene polyols and polyoxypropylene polyols, in particular polyoxyethylene diols, polyoxypropylene diols, polyoxyethylene triols, and polyoxypropylene triols.

Particularly suitable are polyoxyalkylene diols or polyoxyalkylene triols having a degree of unsaturation lower than 0.02 mEq/g and having a molecular weight Mₙ in the range from 1000 to 15'000 g/mol, as are polyoxyethylene diols, polyoxyethylene triols, polyoxypropylene diols and polyoxypropylene triols having a molecular weight of 400 to 15 000 g/mol.

Likewise particularly suitable and preferred are so-called ethylene oxide-terminated (EO-endcapped/ethylene oxide-endcapped) polyoxypropylene polyols. The latter are special polyoxypropylene polyoxyethylene polyols that are obtained for example when pure polyoxypropylene polyols, in particular polyoxypropylene diols and triols, after completion of the polypropoxylation reaction, are further alkoxylated with ethylene oxide and thus have primary hydroxyl groups. Preferred in this case are polyoxypropylene polyoxyethylene diols and polyoxypropylene polyoxyethylene triols.

Among the polyether polyols, most preferred are polytetrahydrofuran diols and polytrimethylene glycols, which both are linear, unbranched C3 or C4 polyether diols.

Polytrimethylene glycols can be produced from the polymerization of propanediol, in particular from biobased propanediol. Such polytrimethylene glycols are commercially available under the trade name Velvetol^{®} from WeylChem Allessa GmbH. Of the Velvetol^{®} types, Velvetol^{®} H250, Velvetol^{®} H500, Velvetol^{®} H1000 and Velvetol^{®} H2000 are particularly preferred, which, depending on the type, have an average molecular weight Mₙ, measured by gel permeation chromatography (GPC) against polystyrene as a standard, in the range between 250 and 2000 g/mol.

Suitable polytetrahydrofuran diols for the production of polyurethane polymer **PU** are usually produced from tetrahydrofuran by acid catalysis at 30 to 40 °C. In chemical terms, polytetrahydrofuran is polytetramethylene ether glycol (PTMEG). The polytetrahydrofuran diols are produced in a manner known to the skilled person and are commercially available, for example under the trade names Terathane^{®} PTMEG from Tri-iso or PolyTHF^{®} from BASF, which, depending on the type, have an average molecular weight Mₙ, measured by gel permeation chromatography (GPC) against polystyrene as a standard, in the range between 250 and 2000 g/mol.

Also suitable are hydroxyl-terminated polybutadiene polyols, for example those produced by polymerization of 1,3-butadiene and allyl alcohol or by oxidation of polybutadiene and also the hydrogenation products thereof.

Also suitable are styrene-acrylonitrile grafted polyether polyols such as those commercially available under the trade name Lupranol^{®} from Elastogran GmbH, Germany.

Further suitable polyols are poly(meth)acrylate polyols.

Also suitable are polyhydroxy-functional fats and oils, for example natural fats and oils, in particular castor oil, or so-called oleochemical polyols obtained by chemical modification of natural fats and oils, the epoxy polyesters or epoxy polyethers obtained for example by epoxidation of unsaturated oils and subsequent ring opening with carboxylic acids or alcohols respectively, or polyols obtained by hydroformylation and hydrogenation of unsaturated oils. Also suitable are polyols obtained from natural fats and oils by degradation processes such as alcoholysis or ozonolysis and subsequent chemical linking, for example by transesterification or dimerization, of the thus obtained degradation products or derivatives thereof. Suitable degradation products of natural fats and oils are in particular fatty acids and fatty alcohols and also fatty acid esters, in particular the methyl esters (FAME), which can be derivatized to hydroxy fatty acid esters, for example by hydroformylation and hydrogenation.

Likewise suitable are, in addition, polyhydrocarbon polyols, also referred to as oligohydrocarbonols, for example polyhydroxy-functional ethylene-propylene, ethylene-butylene or ethylene-propylene-diene copolymers, for example those produced by Kraton Polymers, USA, or polyhydroxy-functional copolymers of dienes, such as 1,3-butanediene or diene mixtures, and vinyl monomers such as styrene, acrylonitrile or isobutylene, or polyhydroxy-functional polybutadiene polyols, for example those which are produced by copolymerization of 1,3-butadiene and allyl alcohol and which may also be hydrogenated.

Also suitable are polyhydroxy-functional acrylonitrile/butadiene copolymers, such as those that can be produced from epoxides or amino alcohols and carboxyl-terminated acrylonitrile/butadiene copolymers, which are commercially available under the name Hypro^{®} (formerly Hycar^{®}) CTBN from Emerald Performance Materials, LLC, USA.

All recited polyols preferably have an average molecular weight Mₙ from 250 to 15'000 g/mol, preferably from 300 to 10'000 g/mol, more preferably from 500 to 5'000 g/mol and preferably an average OH functionality in the range from 1.5 to 4, preferably 2 to 3.

The polyol used for polyurethane polymer **PU** is preferably a polyether polyol and/or a polyester polyol, and the polyurethane polymer **PU** containing isocyanate groups obtaining therefrom is thus a polyetherurethane polymer containing isocyanate groups or a polyesterurethane polymer containing isocyanate groups. Such a polymer enables moisture-curing polyurethane compositions having high extensibility and elasticity.

In especially preferred embodiments of the polyurethane composition according to the invention, the polyurethane polymer **PU** containing isocyanate groups in polyisocyanate **I** is based on a polytetrahydrofuran diol having a number average molecular weight Mₙ in the range from 250 to 1'500 g/mol.

In the same or another especially preferred embodiments of the polyurethane composition according to the invention, the polyurethane polymer **PU** containing isocyanate groups in polyisocyanate **I** is based on a polyester diol having a number average molecular weight Mₙ in the range from 1'000 to 3'000 g/mol.

In some preferred embodiments, the NCO/OH ratio in the reaction between the monomeric diisocyanate and the polyol to form polyurethane polymer **PU** is preferably in the range from 3/1 to 10/1, more preferably in the range from 3/1 to 8/1, especially in the range from 4/1 to 7/1. With such high NCO/OH ratios, a lower polydispersity and more uniform chain length of the resulting polyurethane polymer **PU** can be obtained.

The reaction between the monomeric diisocyanate and the polyol is preferably conducted with exclusion of moisture at a temperature in the range from 20 to 160°C, especially 40 to 140°C, optionally in the presence of suitable catalysts. However, polyurethane polymer **PU** can also be produced in situ within component **B,** simply by adding a monomeric diisocyanate, in particular MDI, and a suitable polyol.

The polymer **PU** containing isocyanate groups preferably has a viscosity at 20°C of not more than 50 Pa·s, especially not more than 40 Pa·s, more preferably not more than 30 Pa s. The viscosity is determined here with a cone-plate viscometer having a cone diameter 25 mm, cone angle 1°, cone tip-plate distance 0.05 mm, at a shear rate of 10 s⁻¹.

In especially preferred embodiments of the polyurethane composition according to the invention, the polyurethane polymer **PU** containing isocyanate groups in polyisocyanate I is obtained from a reaction of at least one polyether polyol, in particular polytetrahydrofuran diol, and diphenylmethane 4,4'-, 2,4'- and/or 2,2'-diisocyanate (MDI), in particular 4,4'-MDI.

In the same or other especially preferred embodiments of the polyurethane composition according to the invention, the polyurethane polymer **PU** containing isocyanate groups in polyisocyanate **I** is obtained from a reaction of at least one polyester polyol, in particular polyester diol, and diphenylmethane 4,4'-, 2,4'- and/or 2,2'-diisocyanate (MDI), in particular 4,4'-MDI.

In the second component **B** of the composition of the invention, polyisocyanate **I** is preferably present in an amount from 25% by weight to 100% by weight, especially from 50% by weight to 95% by weight, more preferably from 75% by weight to 90% by weight, based on the second component **B.**

### Catalyst K

The first component **A** and/or the second component **B** further comprises at least one metal catalyst **K** for the reaction of hydroxyl groups and isocyanate groups that is able to form thio complexes. Suitable metal catalysts **K** are thus all metal catalysts that may be used as a crosslinking catalyst in polyurethane chemistry and can at the same time form thio complexes with thiols in the presence thereof.

The metal catalyst **K** is preferably present only in the first component **A.** This has the advantage of achieving better storage stability.

The amount of metal catalyst **K** in the first component **A** is in this embodiment preferably within a range from 0.05% to 10% by weight, preferably 0.1% to 5.0% by weight, especially 0.2% to 1.5% by weight, more preferably 0.25% to 1.25% by weight, based on the first component **A.**

In other embodiments when the catalyst is present in the second component **B,** the same preferred amount ranges apply as described above, but based on component **B.**

Examples of suitable metal catalysts are compounds of bismuth, zinc, tin or zirconium, including complexes and salts of these metals.

In preferred embodiments of the polyurethane composition according to the invention, the metal catalyst **K** comprises a bismuth(III) or a tin(II) compound. While tin(IV) compounds are more common as curing catalysts than tin(II) compounds and suitable for the composition according to the invention, it was found that tin(II) compounds are advantageous for long-term stability of the applied coating while still showing the necessary catalytic activity. Furthermore, tin(II) compounds, like bismuth(III) compounds, have the advantage of causing less undesired NCO-water-reaction (during and after curing of the composition and thus foaming) with MDI-based isocyanates than tin(IV) compounds.

The metal catalyst **K** preferably includes a bismuth compound, especially a bismuth(III) compound. In addition to the desired properties as a catalyst able to form thio complexes, a bismuth compound has the advantage of low acute toxicity.

A multiplicity of conventional bismuth catalysts may be used as the bismuth compound. Examples are bismuth carboxylates, for example bismuth acetate, oleate, octoate or neodecanoate, bismuth nitrate, bismuth halides such as the bromide, chloride, or iodide, bismuth sulfide, basic bismuth carboxylates such as bismuthyl neodecanoate, bismuth subgallate or bismuth subsalicylate, and mixtures thereof.

In a preferred embodiment, the metal catalyst **K** is a bismuth(III) complex containing at least one ligand based on 8-hydroxyquinoline. Such complexes are described in EP 1551895. This is preferably a bismuth(III) carboxylate containing one molar equivalent of an 8-hydroxyquinoline ligand.

In a further preferred embodiment, the metal catalyst **K** is a bismuth(III) complex containing at least one ligand based on a 1,3-ketoamide. Such complexes are described in EP 2791153. This is preferably a bismuth(III) carboxylate containing 1 to 3 molar equivalents of a 1,3-ketoamide ligand.

### Additional additives

In addition to the constituents already mentioned, the polyurethane composition may contain further constituents as known to the person skilled in the art from two-component polyurethane chemistry. These may be present in just one component or in both.

Preferred further constituents are inorganic or organic fillers **F,** such as in particular natural, ground or precipitated calcium carbonates, optionally coated with fatty acids, especially stearic acid, baryte (heavy spar), talcs, quartz powders, quartz sand, dolomites, wollastonites, kaolins, calcined kaolins, mica (potassium aluminium silicate), molecular sieves, aluminium oxides, aluminium hydroxides, magnesium hydroxide, silicas including finely divided silicas from pyrolysis processes, industrially produced carbon blacks, graphite, metal powders such as aluminium, copper, iron, silver or steel, PVC powder or hollow spheres, and also flame-retardant fillers such as hydroxides or hydrates, especially hydroxides or hydrates of aluminium, preferably aluminium hydroxide.

Preferably, the composition of the invention comprises at least one filler **F** in the first component **A,** in the second component **B,** or in both components.

The addition of fillers **F** is advantageous in that it increases the strength of the cured polyurethane composition.

The polyurethane composition preferably comprises at least one filler **F** selected from the group consisting of calcium carbonate, carbon black, kaolin, baryte, talc, quartz powder, dolomite, wollastonite, kaolin, calcined kaolin, and mica. Particular preference as fillers **F** is given to ground calcium carbonates, silica, in particular pyrogenic silica, and carbon black.

It may be advantageous to use a mixture of different fillers. Most preferred are combinations of calcium carbonate and/or silica and/or carbon black.

It is however preferred to use fillers, in particular inorganic fillers, with small particle size, preferably with median particle sizes d50, measured with laser diffraction according to ISO 13320:2020, of less than 3 µm, preferably less than 2 µm, in particular less than 1 µm. Such small fillers improve the mechanical properties and abrasion resistance of the composition according to the invention in the cured state. This is especially the case for carbonate and silicate-based fillers.

Thus, in preferred embodiments of the polyurethane composition according to the invention, the composition does not contain silicate and/or carbonate fillers with median particle sizes d50, measured with laser diffraction according to ISO 13320:2020, of more than 3 µm, preferably more than 2 µm, in particular more than 1 µm.

In especially preferred embodiments of the polyurethane composition according to the invention, the composition does not contain any fillers with median particle sizes d50, measured with laser diffraction according to ISO 13320:2020, of more than 3 µm, preferably more than 2 µm, in particular more than 1 µm.

The content of filler **F** in the composition is preferably within a range from 0.1% by weight to 20% by weight, especially 0.2% by weight to 10% by weight, more preferably 0.5% by weight to 5% by weight, based on the overall composition.

The content of filler **F** in the first component **A** is preferably within 0.1% to 30% by weight, preferably 0.2% to 20% by weight, especially 0.5% to 15% by weight, of filler **F,** based on component **A.**

The content of filler **F** in the second component **B** is preferably within a range from 0.1% to 20% by weight, preferably 0.2% to 15% by weight, especially 0.5% to 10% by weight, of filler **F,** based on the second component **B.**

It is possible for further constituents to be additionally present, especially solvents, plasticizers and/or extenders, pigments, rheology modifiers such as, in particular, polyurea pastes, desiccants such as, in particular, zeolites, adhesion promoters such as, in particular, organofunctional trialkoxysilanes, stabilizers against oxidation, heat, light, and UV radiation, flame-retardant substances, and also surface-active substances, especially wetting agents and defoamers. Especially preferred as additives are thixotropy-imparting rheology additives, which facilitate the application as coating on vertical or inclined surfaces, and UV stabilizers, which enhance the stability under UV exposure.

In preferred embodiments of the invention, component **B** contains at least one additive having unsaturated groups, in particular vinyl groups or (meth)acrylate groups, but no reactive groups that spontaneously react with isocyanate groups. Such an additive might improve UV and weathering stability of the coating in harsh environmental conditions, as for example present in offshore wind parks. Such additives, if present, should only be included in component **B,** as they could react with thiol groups of compound **T** included in component **A.** Preferred such additives having unsaturated groups are ethyleneglycol di(meth)acrylate, tetraethyleneglycol di(meth)acrylate, tripropyleneglycol di(meth)acrylate, polyethyleneglycol di(meth)acrylate, polypropyleneglycol di(meth)acrylate, 1,4-butanediol di(meth)acrylate, 1,6-hexanediol di(meth)acrylate, neopentylglycol di(meth)acrylate, trimethylolpropane tri(meth)acrylate, pentaerythritol tetra(meth)acrylate, dipentaerythritol tetra(meth)acrylate, dipentaerythritol penta(meth)acrylate, dipentaerythritol hexa(meth)acrylate, and mixed polyesters of glycols, dicarboxylic acids or their esters or anhydrides, and acrylic or methacrylic acid or their esters, such as polyester (meth)acrylates available from Toagosei under the trade name of Aronix^{®} under the type ranges M-6000, M-7000, M-8000 and M-9000, in particular the acrylates of these compounds, as well as mixtures of these compounds. Particular preferences are given to polyester acrylate compounds, for example, commercially available as Aronix^{®} M8060 from Toagosei.

In the same or other preferred embodiments of the polyurethane composition according to the invention, the composition furthermore contains stabilizers against UV irradiation, preferably selected from 2-(2-hydroxyphenyl)-2H-benzotriazols, (2-hydroxyphenyl)-s-triazines, hydroxybenzophenones, titanium dioxide, hindered amine light stabilizers (HALS), and mixtures thereof.

The use of stabilizers against UV irradiation is not mandatory for the mechanical and application performance of the composition according to the invention but offers the advantage of increased work life of the applied coating under UV exposure, which is common in wind blades.

There are different types of HALS. Most common are so-called "basic HALS", which contain a N-H group on their tetramethylpiperidine moiety. However, there are also so-called "non-basic HALS", in which the N-H group has been converted to a N-R group, for example by acylation or by alkylation or by alkoxylation. HALS types that were alkoxylated are also called "NOR-HALS", as the N-H group was converted to a N-OR group.

Among HALS stabilizers, the non-basic types (for example, N-alkoxylated (NOR HALS) types) are preferred.

Thus, in preferred embodiments, said stabilizers against UV irradiation comprises at least one non-basic HALS which preferably contains at least one N-alkylated or N-acylated or N-alkoxylated 2,2,6,6-tetramethylpiperidine group, preferably an N-alkylated 2,2,6,6-tetramethylpiperidine group.

Examples of suitable HALS having an acylated 2,2,6,6-tetramethylpiperidin group are, for example, Hostavin^{®} 3123 LIQ (Clariant) or Hostavin^{®} 3058 LIQ (Clariant).

An example of a suitable HALS having an ethoxylated 2,2,6,6-tetramethylpiperidin group (NOR-HALS) is, for example, Tinuvin^{®} 123 (BASF). An example of a suitable radical scavenger **RS** having an alkylate

Such stabilizers may preferably be included in amounts of between 0.1 % by weight and 10 % by weight, preferably between 0.5 % by weight and 5 % by weight, based on the total composition.

In the same or other preferred embodiments of the polyurethane composition according to the invention, the composition furthermore contains thixotropy-endowing additives, preferably selected from polyurea pastes, polyamide waxes, hydrophilic silica, and mixtures thereof.

Such additives may preferably be included in amounts of between 0.1 % by weight and 10 % by weight, preferably between 0.5 % by weight and 7.5 % by weight, based on the total composition.

A preferred polyurethane composition comprises a first component **A** that, based on component **A,** comprises
- 30% to 90% by weight, preferably 40% to 85% by weight, especially 50% to 80% by weight, of polyol **A1,** in particular a mixture of polyol **A1a** and polyol **A1b** as defined further above;
- 1% to 15% by weight, preferably 2% to 10% by weight, especially 2.5% to 7.5% by weight, of diol **A2,**
- 0.1% to 10% by weight, preferably 0.2% to 5% by weight, especially 0.3% to 1% by weight, of at least one compound **T** having at least one, preferably 1 or 2 thiols groups,
- 0.05% to 2.5% by weight, preferably 0.1% to 2.0% by weight, especially 0.2% to 1.5% by weight, more preferably 0.25% to 1.25% by weight, of a metal catalyst **K,** and
- 1% to 40% by weight, preferably 2% to 30% by weight, especially 5% to 20% by weight, of filler **F,**
and optionally further constituents.

The same or another preferred polyurethane composition comprises a second component **B** that, based on component **B,** comprises
- 25% to 100% by weight, preferably 50% to 95% by weight, especially 75% to 90% by weight, of polyisocyanate **I,**
- 0% to 20% by weight, preferably 0.5% to 10% by weight, especially 1% to 5% by weight, of filler **F,**
and optionally further constituents.

It is advantageous when the first component **A** and the second component **B** are formulated such that their mixing ratio in parts by volume or parts by weight is within a range from 15:1 to 1:15, preferably from 10:1 to 1:10, especially from 1:10 to 1:1.

In the mixed polyurethane composition, the molar ratio before curing between the number of isocyanate groups in component **B** and the number of active hydrogen-containing groups reactive toward isocyanates in component **A** is preferably within a range from 1.2 to 1, preferably 1.15 to 1.05. However, it is also possible, although not usually preferable, for the proportion of isocyanate groups to be substoichiometric with respect to groups reactive toward isocyanates.

The two components **A** and **B** are produced separately and preferably with the exclusion of moisture. The two components are typically each stored in a separate container. The further, non-mandatory additives of the polyurethane composition as defined above may be present as a constituent of the first or second component, further additives that are reactive toward isocyanate groups preferably being a constituent of the first component **A.** A suitable container for storing the respective component is especially a drum, a hobbock, a bag, a bucket, a can, a cartridge or a tube. The components are both storage-stable, at least in preferred embodiments, meaning that they can be stored prior to use for several months up to one year or longer, without any change in their respective properties to a degree relevant to their use.

The two components **A** and **B** are stored separately prior to the mixing of the composition and are mixed with one another only on use or immediately prior thereto. They are advantageously present in a package consisting of two separate chambers.

In a further aspect, the invention comprises a pack consisting of a package having two separate chambers which respectively contain the first component **A** and the second component **B** of the composition.

Mixing is typically performed via static mixers or with the aid of dynamic mixers. During mixing, care must be taken to ensure that the two components **A** and **B** are mixed as homogeneously as possible. If the two components are mixed incompletely, local deviations from the advantageous mixing ratio will occur, which can result in a deterioration in the mechanical properties.

On contact of the first component **A** with the second component **B,** curing commences through chemical reaction. This involves reaction of the hydroxyl groups and any other substances present that are reactive toward isocyanate groups with the isocyanate groups. Excess isocyanate groups react predominantly with moisture. As a result of these reactions, the polyurethane composition cures to produce a solid material. This process is also referred to as crosslinking.

The invention thus also further provides a cured polyurethane composition obtained from the curing of the polyurethane composition as described in the present document.

The two-component polyurethane composition described is advantageously usable as coating, especially as LEP coating, but would also be suitable as structural adhesive, potting compound or matrix in composite materials, in particular as an assembly adhesive or a direct glazing adhesive.

The invention thus also relates to a process or method for coating a substrate, in particular the leading edge of a wind turbine blade, comprising the steps of:
- mixing the first and second components of a polyurethane composition as described above,
- applying the mixed polyurethane composition onto the substrate surface to be coated, preferably by using a trowel tool for creating a smooth surface,
- curing the polyurethane composition.

The composition can be applied as coating by hand or by automatic application, for example by a robot. It might be advantageous to use an application tool, such as a trowel or smoothening tool, in order to ensure a homogeneous coating layer of largely uniform thickness.

In preferred embodiments of the process or method for coating a substrate as described above, the mixed polyurethane composition is applied using an automatic application method, in particular a robot. Unlike liquid curable compositions of the state of the art or solid LEP elements adhesively bonded to a windblade leading edge, the mixed composition according to the invention can easily be applied using currently available robotic technology. Such a robotic application, for example onto a vertically positioned wind blade, is able to coat a much larger area than application by hand within the same time. The composition according to the invention shows excellent pumpability and thixotropy, while offering a suitably long open time for efficient application. In addition to that, the composition according to the invention cures much faster than commonly used coating compositions of the state of the art.

For example, a robot can apply the mixed composition according to the invention in preferred embodiments at least 5 times faster than any application method using a liquid curable composition of the state of the art or solid LEP elements adhesively bonded to a wind blade leading edge.

The composition according to the invention is preferably applied as coating with a layer thickness of between 0.5 and 5 millimetres, in particular between 1 and 2.5 millimetres.

Suitable substrates to be coated or bonded with the composition according to the invention are in particular
- glass, glass ceramic, glass mineral fiber mats;
- metals and alloys such as aluminum, iron, steel and nonferrous metals, and also surface-finished metals and alloys such as galvanized or chromed metals;
- coated and painted substrates, such as powder-coated metals or alloys and painted sheet metal;
- plastics, such as polyvinyl chloride (rigid and flexible PVC), acrylonitrile-butadiene-styrene copolymers (ABS), polycarbonate (PC), polyamide (PA), poly(methyl methacrylate) (PMMA), polyester, epoxy resins, especially epoxy-based thermosets, polyurethanes (PUR), polyoxymethylene (POM), polyolefins (PO), polyethylene (PE) or polypropylene (PP), ethylene/propylene copolymers (EPM), and ethylene/propylene/diene terpolymers (EPDM), wherein the plastics may preferably have been surface-treated by means of plasma, corona or flames;
- fiber-reinforced plastics, such as carbon fiber-reinforced plastics (CFRP), glass fiber-reinforced plastics (GFRP) and sheet-molding compounds (SMC);
- wood, woodbase materials bonded with resins, for example phenolic, melamine or epoxy resins, resin-textile composites and further so-called polymer composites; and
- concrete, mortar, brick, plaster, and natural stone such as granite, limestone, sandstone or marble.

In the above-described process for coating, the substrate is preferably an optionally coated metal or plastic or a glass fiber-reinforced plastic or a carbon fiber-reinforced plastic or an epoxy-based thermoset.

Most preferably, the substrate to be coated by the process according to the invention is the surface, in particular the leading edge or parts thereof, of a wind rotor blade.

The substrates to be coated can, if required, be pretreated prior to application of the composition. Such pretreatments include, in particular, physical and/or chemical cleaning processes and the application of an adhesion promoter, an adhesion promoter solution or a primer.

The coating process described gives rise to an at least partially coated article on which the composition according to the invention is deposited as coating.

Said article is especially a wind turbine blade, in particular the leading edge thereof.

Accordingly, another aspect of the invention is a coated article, in particular a wind turbine blade, resulting from the coating process as described above.

The polyurethane composition described is characterized by high strength, toughness, and elasticity that is highly constant over a wide temperature range from -35°C to 85°C and by good, largely temperature-independent adhesion properties, especially on metallic, plastic, fibre-reinforced plastic, and coated substrates. Furthermore, the composition exhibits excellent rain erosion resistance and overall weatherability resistance. On account of these properties, it is very particularly suitable as protective coating for objects subjected to stress, in particular outdoors at ambient temperatures. Such objects are in particular wind turbine blades, especially the leading edge thereof.

Accordingly, another aspect of the invention is the use of a polyurethane composition as described above as coating, in particular as protective coating for wind turbine blade leading edges.

### Examples

### Substances used:

**Table 1: Substances used.**

| | |
|---|---|
| Desmodur 44 | Desmodur^{®} 44 MC liquid (Covestro); monomeric diphenylmethane-4,4'-diisocyanate (MDI) |
| Desmodur CD | Desmodur^{®} CD-L (Covestro); modified isocyanate based on diphenylmethane-4,4'-diisocyanate (MDI) |
| pTHF650 | PolyTHF^{®} 650 (BASF); poly(tetrahydrofuran); average Mn -650 g/mol |
| Desmophen 5031 | Desmophen^{®} 5031 BT (Covestro); trifunctional polypropylene ether polyol; Mn: 6000 g/mol; average OH functionality: 3 |
| Desmophen 4042 | Desmophen^{®} 4042 BT (Covestro); branched polypropylene ether polyol |
| Kuraray F-1010 | Kuraray^{®} F-1010 (Kuraray); polyester polyol; Mn: 1000 g/mol; average OH functionality: 3 |
| Kuraray P-2010 | Kuraray^{®} P-2010 (Kuraray); polyester polyol; Mn: 2000 g/mol; average OH functionality: 2 |
| Kuraray F-3010 | Kuraray^{®} F-3010 (Kuraray); polyester polyol; Mn: 3000 g/mol; average OH functionality: 3 |
| Ultrabond 5780 | CAB-O-SIL^{®} ULTRABOND 5780 (Cabot); surface-treated fumed silica; median particle size approx. 15 nm |
| Aerosil R202 | AEROSIL^{®} R 202 (Evonik); fumed silica after-treated with polydimethylsiloxane; median particle size 14 nm |
| Omyabond 520 | Omyabond^{®} 520 OM (Omya); finely ground calcium carbonate (chalk); median particle size 1.7 µm |
| Silbond FW 600 | Silbond^{®} FW 600 RST (Quarzwerke); silanized fused silica; median particle size 4 µm |
| Carbon black | Printex^{®}G (Orion Carbons); carbon black |
| 1,5-Pentanediol | 1,5-Pentanediol (Sigma Aldrich) |
| UV-Benzotriazole | Milliguard^{®} UVX200 HF (Milliken); benzotriazole-based UV absorber |
| UV-Triazine | Tinuvin^{®} 400 (BASF); hydroxyphenyl-triazine (HPT); UV absorber |
| HALS | Tinuvin^{®} 123 (BASF); non-basic liquid hindered amine light stabilizer (HALS) based on an amino-ether functionality |
| TiO₂ | KRONOS^{®} 2220 (Kronos); rutile (titanium dioxide) pigment produced by the chloride process |
| GDMP | Thiocure^{®} 320 (Bruno Bock Thiochemicals); glycol di(3-mercaptopropionate) |
| IOTG | Evabopol 198D (Bruno Bock); Isooctyl thioglycolate |
| Prepolymer 1 | Isocyanate-functional polyetherurethane prepolymer; synthesis below |
| Prepolymer 2 | Isocyanate-functional polyetherurethane prepolymer; synthesis below |
| Polyurea paste | Polyurea-based thixotropy additive; synthesis see below |
| DIDP | Diisodecyl phthalate (plasticizer) |
| Bi catalyst | Coscat^{®} 83 (Vertellus Specialties Inc.); Bismuth trineodecanoate |

### Preparation of isocyanate-functional prepolymers

### Prepolymer 1

727.0 g of polyoxypropylene diol (Acclaim^{®} 4200 N, Covestro; OH value 28.5 mg KOH/g) and 273.0 g of 4,4'-diphenylmethane diisocyanate (Desmodur^{®} 44 MC L, from Covestro) were reacted according to the known process to give a polyether urethane polymer with an NCO content of 7.6 wt.%, a viscosity of 5.2 Pa-s at 20 °C and a 4,4'-diphenylmethane diisocyanate content of about 18 wt.%.

Subsequently, the volatile components, in particular a large proportion of the remaining 4,4'-diphenylmethane diisocyanate, were then removed by distillation in a short path evaporator (jacket temperature 180 °C, pressure 0.1 to 0.005 mbar, condensation temperature 47 °C). The resulting polyether urethane polymer had an NCO content of 1.8 % by weight, a viscosity of 15.2 Pa-s at 20 °C and a 4,4'-diphenylmethane diisocyanate content of 0.08 % by weight.

### Prepolymer 2

A polytetrahydrofuran diol with an average molecular weight of 650 g/mol (Terathane^{®} PTMEG 650, OH number 172 mg KOH/g, from Tri-iso) was reacted with 4,4'-diphenylmethane diisocyanate (Desmodur^{®} 44 MC L, from Covestro) with an NCO/OH ratio of 4/1 at 80 °C according to a known procedure to form an NCO-terminated prepolymer. Subsequently, the volatile components, in particular unreacted 4,4'-diphenylmethane diisocyanate, were removed by distillation in a short path evaporator (jacket temperature 180 °C, pressure 0.1 to 0.005 mbar, condensation temperature 47 °C), whereby a prepolymer with a content of monomeric 4,4'-diphenylmethane diisocyanate of 0.05 % by weight was obtained.

The content of residual unreacted MDI within the prepared NCO-functional polymer mixtures was determined by means of HPLC (detection via photodiode array; 0.04 M sodium acetate / acetonitrile as mobile phase) after prior derivatization by means of N-propyl-4-nitrobenzylamine.

### Polyurea paste

The thixotropy-endowing polyurea paste was prepared by placing 300 g of diisodecyl phthalate and 48 g of 4,4'-methylenediphenyl diisocyanate (Desmodur^{®} 44 MC L; from Covestro) in a vacuum mixer, warmed up slightly and then under strong stirring 27 g of monobutylamine were slowly added dropwise. The resulting paste was stirred for a further hour under vacuum and cooling.

### Preparation of polyurethane compositions

To show the effects of the invention, a series of two-component polyurethane compositions were prepared by first preparing the individual components **A** and **B.** This is described in the following.

### Component A

A series of exemplary components **A** were prepared (A-1 to A-9). The compositions of the components **A** are shown in Tables 2 and 3. The numerical values of the ingredients in each experiment denote the weight parts added to each respective composition.

**Table 2: Components A (A-1 to A-4). Numbers in weight parts. * not according to the invention.**

| **Component A** | **A-1 *** | **A-2 *** | **A-3** | **A-4** |
|---|---|---|---|---|
| Aerosil R202 | - | 1 | 2.8 | - |
| Ultrabond 5780 | - | - | - | 4 |
| 1,5-Pentanediol | 32.4 | 2.5 | 6 | 5.5 |
| GDMP | 0.4 | 1.8 | 0.8 | 0.5 |
| pTHF650 | 12 | 73.5 | - | - |
| Kuraray F1010 | - | - | - | 6 |
| Kuraray F3010 | - | 9 | 8 | - |
| Kuraray P2010 | - | - | 70.2 | 54.6 |
| Desmophen 4042 | 54 | - | - | - |
| UV-Benzotriazole | - | 1 | 1 | 1 |
| UV-Triazine | - | 2 | 1 | 1 |
| HALS | - | 3 | 2 | 2 |
| Omyabond 520 | - | - | - | 17 |
| Bi catalyst | 1.2 | 0.2 | 0.2 | 0.4 |
| TiO₂ | - | 8 | 8 | 8 |
| *Total* | *100* | *100* | *100* | *100* |

**Table 3: Components A (A-5 to A-9). Numbers in weight parts.**

| **Component A** | **A-5** | **A-6** | **A-7** | **A-8** | **A-9** |
|---|---|---|---|---|---|
| Ultrabond 5780 | 3.1 | 3.1 | 3.1 | 3.1 | 4 |
| 1,5-Pentanediol | 5.4 | 5.4 | 6.2 | 4.7 | 6 |
| IOTG | 0.6 | 0.6 | 0.6 | 0.6 | 0.6 |
| GDMP | - | - | - | - | 0.4 |
| Kuraray F1010 | 8 | 8 | 8 | 23 | 9 |
| Kuraray P2010 | 54.9 | 54.9 | 54.1 | 40.6 | 66.87 |
| UV-Benzotriazole | 1 | 1 | 1 | 1 | 1 |
| UV-Triazine | 1 | 1 | 1 | 1 | 1 |
| HALS | 2 | 2 | 2 | 2 | 2 |
| Omyabond 520 | 15 | 15 | - | - | - |
| Silbond FW 600 | - | - | 15 | 15 | - |
| Bi catalyst | 1 | 1 | 1 | 1 | 1 |
| TiO₂ | 8 | 8 | 8 | 8 | 8 |
| *Total* | *104* | *104* | *105* | *112* | *99.87* |

### Component B

A series of exemplary components **B** were prepared (B-1 to B-9) each belonging to the respective component **A** of the same number. The compositions of the components **B** are shown in Tables 4 and 5. The numerical values of the ingredients in each experiment denote the weight parts added to each respective composition.

**Table 4: Components B (B-1 to B-4). Numbers in weight parts.**

| **Component B** | **B-1** | **B-2** | **B-3** | **B-4** |
|---|---|---|---|---|
| Prepolymer 1 | 65 | - | - | - |
| Prepolymer 2 | 35 | 65 | 65.2 | - |
| Desmodur CD | - | 30 | 21.3 | 22.5 |
| Desmodur 44 | - | - | - | 25 |
| pTHF650 | - | - | - | 36 |
| Polyurea paste | - | - | - | 14.3 |
| Ultrabond 5780 | - | 4.8 | 2.8 | 2 |
| Carbon black | - | 0.2 | 0.2 | 0.2 |
| DIDP | - | - | 10.5 | - |
| *Total* | *100* | *100* | *100* | *100* |

**Table 5: Components B (B-5 to B-9). Numbers in weight parts.**

| **Component B** | **B-5** | **B-6** | **B-7** | **B-8** | **B-9** |
|---|---|---|---|---|---|
| Desmodur CD | 22.4 | 19.1 | 12.5 | 12.5 | - |
| Desmodur 44 | 25 | 25 | 25 | 25 | 37.2 |
| pTHF650 | 36 | 26 | - | - | - |
| Desmophen 5031 | - | 13.3 | - | - | - |
| Kuraray P201 0 | - | - | 45.9 | 45.9 | 44.6 |
| Polyurea paste | 10 | 10 | 10 | 10 | - |
| Ultrabond 5780 | 1 | 1 | 1 | 1 | 4.7 |
| Carbon black | 0.2 | 0.2 | 0.2 | 0.2 | - |
| DIDP | 5.4 | 5.4 | 5.4 | 5.4 | 13.5 |
| *Total* | *100* | *100* | *100* | *100* | *100* |

### Two-component compositions

A series of exemplary two-component compositions was prepared, using compositions A-1 to A-8 as components **A** and compositions B-1 to B-9 as component **B.** In each experiment, the mixing ratio (weight/weight) of each respective component **A** to component **B** was 1:1.

For each composition, the ingredients of the first component **A** specified in the tables were processed in the specified amounts (in parts by weight), by means of a vacuum dissolver with the exclusion of moisture, into a homogeneous paste and stored. The ingredients of the second component **B** specified in the tables were likewise processed and stored. The two components were then mixed together for 30 seconds, by means of a SpeedMixer^{®} (DAC 150 FV, Hauschild), into a homogeneous paste, which was immediately tested as follows:
The mechanical properties of **tensile strength, elongation at break** and **modulus of elasticity ("E-Mod")** (at 0.5-5% elongation and at 0.5-100% elongation, respectively) were measured in accordance with DIN EN 53504 at an extension rate of 200 mm/min. The samples used for this measurement were cured during 7 days at 23°C (50% r.h.). Some samples were subjected to an additional heat treatment of 7 days at 100°C, stored for 24 hours at 23°C (50% r.h.), and measured in the same manner.

The **tear propagation resistance ("TPR")** was determined according to DIN 53515 using films cured for 14 days at 23 °C (50% r.h.) having a film thickness of 2 mm. Some samples were subjected to an additional heat treatment of 7 days at 100°C, stored for 24 hours at 23°C (50% r.h.), and measured in the same manner.

The results of these measurements are shown in Tables 6 and 7.

**Table 6: Test measurement data of compositions C-1 to C-3. * not according to the invention.**

| **Two-component Composition** | **C-1 *** | **C-2 *** | **C-3** |
|---|---|---|---|
| *Component A* | ***A-1 **** | ***A-2 **** | ***A-3*** |
| *Component B* | ***B-1*** | ***B-2*** | ***B-3*** |
| Tensile strength [MPa] | 5.5 | 8.8 | 22.7 |
| Elongation at break [%] | 391 | 568 | 530 |
| E-Mod (0.5-5%) [Mpa] | 5.1 | 4.1 | 9.9 |
| E-mod (0.5-100%) [Mpa] | 1.7 | 1.0 | 2.5 |
| TPR [N/mm] | 7.9 | 11.1 | 18.4 |

**Table 7: Test measurement data of compositions C-4 to C-9. * not according to the invention. ¹ measured after heat treatment (7 days at 100 °C). "n/m" means that this value was not measured.**

| **Two-component Composition** | **C-4** | **C-5** | **C-6** | **C-7** | **C-8** | **C-9** |
|---|---|---|---|---|---|---|
| *Component A* | ***A-4*** | ***A-5*** | ***A-6*** | ***A-7*** | ***A-8*** | ***A-9*** |
| *Component B* | ***B-4*** | ***B-5*** | ***B-6*** | ***B-7*** | ***B-8*** | ***B-9*** |
| Tensile strength [Mpa] | 25.2 | 24.6 | 18.5 | 18.8 | 11.2 | 19.3 |
| Elongation at break [%] | 502 | 516 | 520 | 693 | 440 | 796 |
| E-Mod (0.5-5%) [Mpa] | 11.2 | 8.8 | 7.4 | 9.0 | 4.2 | 6.8 |
| E-mod (0.5-100%) [Mpa] | 1.9 | 2.1 | 1.9 | 1.8 | 1.4 | 1.9 |
| TPR [N/mm] | 12 | 13 | 15 | 18 | 9 | 26 |
| Tensile strength [Mpa] ¹ | 19.1 | 12.1 | 12.4 | 16.8 | 7.89 | 24.7 |
| Elongation at break [%] ¹ | 663 | 743 | 765 | 900 | 482 | 711 |
| E-Mod (0.5-5%) [Mpa] ¹ | 14.2 | 10.9 | 7.2 | 7.7 | 4.6 | 3.8 |
| E-mod (0.5-100%) [Mpa] ¹ | 2.0 | 1.6 | 1.5 | 1.7 | 1.3 | 1.3 |
| TPR [N/mm] ¹ | 23.9 | 26 | n/m | n/m | n/m | 16 |

### Rain erosion test

Rain erosion testing according to DNVGL-RP 0171 was performed at the AeroNordic test facility in Denmark. Experimental composition **C-3,** consisting of components **A-3** and **B-3,** and experimental composition **C-7,** consisting of components **A-7** and **B-7,** and experimental composition **C-9,** consisting of components **A-9** and **B-9,** were tested using the parameters detailed in Table 8 below.

For testing, the substrate was prepared by roughening, and components **A-3** and **B-3, A-7** and **B-7,** and **A-9** and **B-9,** respectively, of two-component compositions to be tested were mixed using a speedmixer and applied as coating onto the surface of the testing substrate with a layer thickness of each mixed composition **C-3, C-7,** and **C-9** of 1500-2000 microns. For both tests, the respective applied coating was allowed to cure for 48 hours at 23°C (50% r.h.). Three samples of the same coating **C-3, C-7,** and **C-9,** respectively, were prepared and tested in parallel (sample coatings **C-3a, C-3b,** and **C3-c,** and sample coatings **C-7a, C-7b,** and **C7-c,** and sample coatings **C-9a, C-9b,** and **C9-c,** respectively).

The coated substrates (three for each experiment) were then subjected to the rain erosion test according to DNVGL-RP 0171. The results of each of the three samples of each of the two sample coatings **C-3, C-7,** and **C-9** are summarized in Table 9.

**Table 8: Rain erosion test parameters.**

| **Parameter** | **Unit** | **C-3** | **C-7** | **C-9** |
|---|---|---|---|---|
| Rotation Speed | [rpm] | 1278 | 1278 | 1278 |
| Water flow | [L/h] | 65 | 65 | 65 |
| Rain intensity | [mm/h] | 31.34 | 31.34 | 31.34 |
| Water quality | [µS/cm] | 4.3 | 4.1 | 4.1 |
| Test chamber temperature | [°C] | 19-24 | 16-22 | 17-23 |
| Test specimen temperature | [°C] | ambient | ambient | ambient |
| Mean droplet size, diameter | [mm] | 2.252 | 2.252 | 2.103 |
| Droplet size standard deviation | [mm] | 0.404 | 0.404 | 0.414 |

**Table 9: Rain erosion test results.**

| **Parameter** | **Unit** | **C-3a** | **C-3b** | **C-3c** | **C-7a** | **C-7b** | **C-7c** | **C-9a** | **C-9b** | **C-9c** |
|---|---|---|---|---|---|---|---|---|---|---|
| Failure mode | [-] | Erosion | | | Erosion | | | Erosion | | |
| Erosion starting point | [min] | 15 | 135 | 75 | 30 | 45 | 30 | 60 | 105 | 45 |
| Breakthrough | [min] | 456 | 915 | 645 | 300 | 330 | 285 | 495 | 585 | 450 |
| Stage of erosion process | [-] | Erosion starting point and LEP breakthrough | | | Erosion starting point and LEP breakthrough | | | Erosion starting point and LEP breakthrough | | |

The results in Tables 6 and 7 show that the compositions of the invention have excellent mechanical properties after curing, in particular regarding tensile properties and tear propagation resistance. Furthermore, the examples that were measured after heat curing prove that the compositions are highly stable in thermally demanding environments.

The results in Table 9 show that the compositions according to the invention possess exceptionally high resistance against rain erosion, especially samples C-3 and C-9. Note that each sample material was cured only for 48h prior to testing, which is an unusually short time and proves that the composition according to the invention is not only mechanically suitable as LEP coating, but can also applied much faster than most of the compositions of the state of the art.

## Claims

1. A polyurethane composition consisting of a first and a second component; wherein
- the first component **A** comprises
- at least one polyol **A1** having an average OH functionality in the range from 1.5 to 4, preferably in the range from 2 to 3, and a number average molecular weight Mₙ in the range from 250 to 10'000 g/mol; and
- at least one compound **T** that has at least one thiol group; and
- the second component **B** comprises
- at least one polyisocyanate **I**;
wherein one of the two components additionally comprises at least one metal catalyst **K** for the reaction of hydroxyl groups and isocyanate groups that is able to form thio complexes; and
the molar ratio of all the thiol groups in the at least one compound **T** to all metal atoms in the at least one metal catalyst **K** is between 1:1 and 250:1;
**characterized in that**
polyol **A1** is at least one polyester or polycarbonate polyol, preferably a polyester polyol; and
polyisocyanate **I** comprises diphenylmethane 4,4'-, 2,4'- and/or 2,2'-diisocyanate (MDI) and/or isocyanate-functional reaction products of MDI, in particular comprising a polyurethane polymer **PU** containing isocyanate groups, obtained from a reaction of at least one polyol and MDI.

2. The polyurethane composition as claimed in claim 1, **characterized in that** the metal catalyst **K** comprises a bismuth(III) or a tin(II) compound.

3. The polyurethane composition as claimed in any of claims 1 or 2, **characterized in that** all isocyanate groups of polyisocyanate I are based on MDI, preferably on 4,4'-MDI, and are present in compounds selected from polyurethane polymer **PU,** monomeric MDI, preferably monomeric 4,4'-MDI, and oligomeric forms of MDI, preferably oligomeric forms of 4,4'-MDI, and mixtures thereof.

4. The polyurethane composition as claimed in any of the preceding claims, **characterized in that** the at least one compound **T** comprises a monothiol or polythiol compound having 1 or 2 thiol groups.

5. The polyurethane composition in any of the preceding claims, **characterized in that** component **A** furthermore comprises at least one diol **A2** having two hydroxyl groups that are linked via a C2 to C9 carbon chain.

6. The polyurethane composition as claimed in any of the preceding claims, **characterized in that** the molar ratio of all the thiol groups in the at least one compound **T** to all metal atoms in the at least one metal catalyst **K** is between 2:1 and 10:1.

7. The polyurethane composition as claimed in any of the preceding claims, **characterized in that** the composition furthermore contains stabilizers against UV irradiation, preferably selected from 2-(2-hydroxyphenyl)-2H-benzotriazols, (2-hydroxyphenyl)-s-triazines, hydroxybenzophenones, titanium dioxide, hindered amine light stabilizers, and mixtures thereof.

8. The polyurethane composition as claimed in any of the preceding claims , **characterized in that** said polyol **A1** is a mixture of a first polyester polyol **A1a** having an average OH-functionality of between 1.5 and 2.5 and a second polyester polyol **A1b** having an average OH-functionality of between 2.5 and 3.5, wherein the weight ratio of polyol **A1a** to polyol **A1b** is in the range of 15:1 to 2:1, preferably 10:1 to 5:1.

9. The polyurethane composition as claimed in claim 8, **characterized in that** said polyol **A1a** has a number average molecular weight Mₙ in the range from 500 to 2'500 g/mol, and said polyol **A1b** has a number average molecular weight Mₙ in the range from 1'000 to 4'000 g/mol.

10. The polyurethane composition as claimed in any of the preceding claims, **characterized in that** the polyurethane polymer **PU** containing isocyanate groups in polyisocyanate **I** is based on a polytetrahydrofuran diol having a number average molecular weight Mₙ in the range from 250 to 1'500 g/mol.

11. The polyurethane composition as claimed in any of the preceding claims, **characterized in that** the composition does not contain silicate and/or carbonate fillers with median particle sizes d50, measured with laser diffraction according to ISO 13320:2020, of more than 3 µm, preferably more than 2 µm, in particular more than 1 µm.

12. The polyurethane composition as claimed in claim 11, **characterized in that** the composition does not contain any fillers with median particle sizes d50, measured with laser diffraction according to ISO 13320:2020, of more than 1 µm.

13. A process for coating a substrate, in particular the leading edge of a wind turbine blade, comprising the steps of:
- mixing the first and second components of a polyurethane composition as claimed in any of claims 1 to 12,
- applying the mixed polyurethane composition onto the substrate surface to be coated, preferably by using a trowel tool for creating a smooth surface,
- curing the polyurethane composition.

14. A coated article, in particular a wind turbine blade, resulting from the coating process as claimed in claim 13.

15. The use of a polyurethane composition as claimed in any of claims 1 to 12 as coating, in particular as protective coating for wind turbine blade leading edges.
